# EUROPEAN PATENT SPECIFICATION

(11) **EP 0 314 639 B1**
(45) Date of publication and mention of the grant of the patent: **31.08.1994**
(21) Application number: 88830438.3
(22) Date of filing: 25.10.1988
(51) Int. Cl.: F16H 37/04, F16H 3/48

(54) **A tractor gearbox with a hydraulically-controlled, two-speed transmission-ratio variator**
Traktorgetriebe mit hydraulisch gesteuertem Zweigangwechselgetriebe
Transmission pour tracteur avec un variateur de vitesse à deux rapports et à commande hydraulique

(30) Priority: 26.10.1987 IT 6789687
(43) Date of publication of application: 03.05.1989
(73) Proprietor: SAME S.p.A., I-24047 Treviglio (Bergamo) (IT)
(72) Inventor: Massaccesi, Gianni c/o Same S.p.A., I-24047 Treviglio (IT)
(74) Representative: Buzzi, Franco

(56) References cited:
- WO-A-83/03289
- FR-A- 2 188 522
- GB-A- 2 087 993
- US-A- 4 532 827

## Description

The present invention relates in general to tractor gearboxes.

More particularly the invention relates to a gearbox of the type including a main shaft which is rotated by the tractor engine through a friction clutch and to which a plurality of driving gears are coupled for rotation, a counter shaft on which a plurality of driven gears meshed with the driving gears are rotatably mounted, mechanically-operated engagement-synchronising means for selectively connecting the driven gears for rotation with the counter shaft and a transmission-ratio variator with two speeds, fast and slow respectively.

In well-known gearboxes of the type defined above and corresponding to the preamble of claim 1, the transmission-ratio variator is normally arranged upstream of the gearbox, between the friction clutch of the tractor and the main shaft of the gearbox.

Such arrangements can have the disadvantage that the correct operation of the means for synchronising the engagement of the speed ratios of the gearbox is altered by the variator. Moreover, the variator is usually unable to ensure mechanical continuity of the drive when the tractor engine is switched off, and is generally rather bulky.

The object of the present invention is to avoid the above problems and to produce a tractor gearbox of the type defined above in which the operation of the means for synchronising the engagement of the gear ratios is not altered by the variator, and in which the latter is simple to produce, less bulky and very effective in operation.

According to the invention, this object is achieved by virtue of the fact that the transmission-ratio variator is situated downstream of the gearbox and comprises an epicyclic unit having an input member rotated by the counter shaft of the gearbox and an output member rotated through two hydraulically-operated friction clutches which can be engaged and disengaged alternatively without interrupting the torque transmission from the counter shaft of the gearbox to the output member of the epicyclic unit, and in that the counter shaft of the gearbox is hollow and the epicyclic unit comprises:
a first sun gear coupled for rotation with the counter shaft,
a second sun gear coupled for rotation with an output shaft which passes through and is rotatable coaxially in the counter shaft,
a planet-carrier coaxial with the output shaft and carrying a series of planets with two sets of teeth of which the first set meshes with the first sun gear and the second set meshes with the second sun gear, the planet-carrier being selectively lockable against rotation by means of the engagement of the first of the two friction clutches or connectible for rotation with the second sun gear by means of the engagement of the second of the two friction clutches; resilient means being provided for keeping the first friction clutch normally engaged.

By virtue of this conformation, the continuity of the drive through the epicyclic unit is ensured even when the tractor engine is switched off, as well as in the event of damage to the hydraulic operating system.

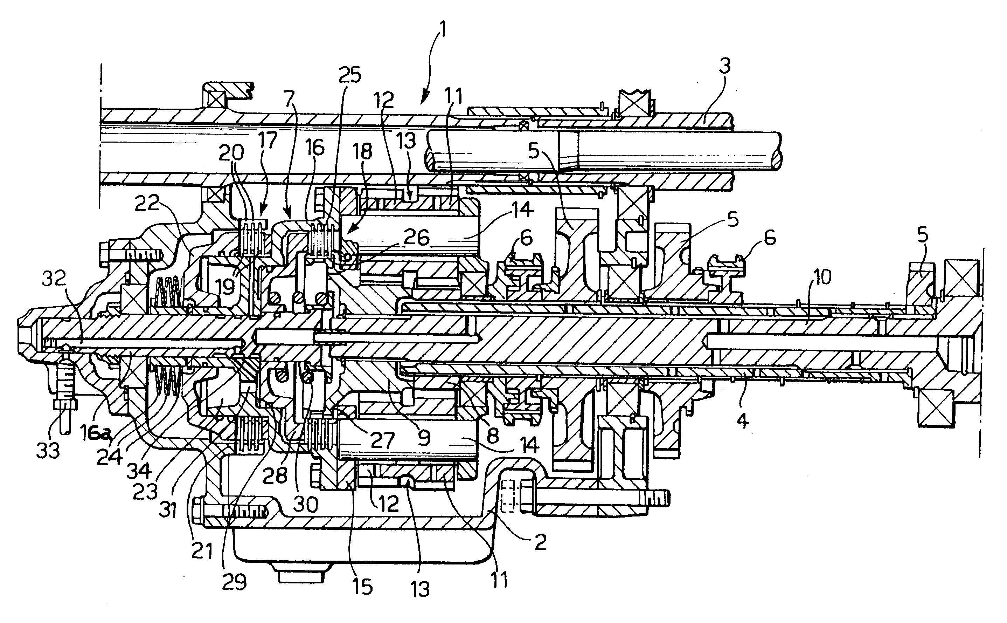

The invention will now be described in detail with reference to the appended drawing, provided purely by way of non-limiting example, which shows a tractor gearbox according to the invention schematically and in axial section.

With reference to the drawing, a tractor gearbox is generally indicated 1 and includes a casing 2 which rotatably supports a main shaft 3 which is rotated by the tractor engine through a friction clutch, not illustrated, and a counter shaft 4.

A series of driving gears are fixed to the main shaft 3 for rotation therewith, there being the same number of driving gears as gear ratios of the gearbox 1. The driving gears, which are not shown in the drawing for simplicity of illustration, are meshed with the same number of driven gears, three of which are indicated 5 in the drawing, which are freely rotatable on the counter shaft 4. The driven gears 5 are selectively engageable for rotation with the shaft 4 by means of respective mechanically-operated sleeve couplings, two of which are indicated 6, with operatively-associated synchronising devices, not illustrated, which are conventional to an expert in the art.

The gearbox 1 also includes a two-speed transmission-ratio variator, generally indicated 7, situated within the casing 2, downstream of the driven gears 5, that is, at the output of the counter shaft 4. This variator 7 enables the output ratio of the gearbox 1 to be varied with two speeds, fast and slow respectively, without the operation of the friction clutch situated upstream of the gearbox 1, and without interruption of the driving torque transmission.

The variator 7 is constituted by a compact epicyclic unit including an input sun gear 8 coupled for rotation with the inner end of the counter shaft 4, and an output sun gear 9. The counter shaft 4 is hollow and the output sun gear 9 is coupled for rotation with an output shaft 10 which passes through and is rotatable coaxially in the counter shaft 4.

The input sun gear 8 and the output sun gear 9 mesh with teeth 11 and 12 respectively of a series of planets 13 which are rotatable on axial pins 14 carried by a planet-carrier 15 coaxial with the output shaft 10.

The planet carrier 15 is firmly fixed to a bell member 16 carried by an auxiliary shaft 16a rotatably mounted in the casing 2 and aligned with the output shaft 10.

The bell member 16 constitutes the driving member of first and second hydraulically-operated friction clutches indicated 17 and 18 respectively.

The first friction clutch 17 includes a series of driving friction discs 19 which rotate on the outside of the bell member 16 and between which are interposed driven friction discs 20 carried by a fixed annular member or stator 21 firmly fixed to the casing 2. A first pressure plate 22 is operatively associated with the friction discs 19 and 20, and is sealingly slidable on the outside of the bell member 16, defining therewith a first thrust chamber 23. The pressure plate 22 is normally urged by a pack of Belleville washers 24, coaxial with the auxiliary shaft 17, into the position in which the friction discs 19 and 20 are clamped together. In the absence of pressure in the thrust chamber 23, the washers 24 thus tend to keep the first friction clutch 17 in the engaged condition. In this condition, the bell member 16, and hence the planet carrier 15, are locked to the annular member 21 against rotation and are therefore kept stationary relative to the casing 2.

The second friction clutch 18 includes a series of driving friction discs 25 coupled to the inside of the bell member 16, and between which are interposed driven friction discs 26 carried by a ring-shaped appendage 27 of the output sun gear 9.

A second pressure plate 28 is operatively associated with these friction discs 25 and 26 and is sealingly slidable like a piston within the bell member 16 on the opposite side from the first pressure plate 22, defining with the bell member 16 a second thrust chamber 29.

A helical compression spring 30, coaxial with the auxiliary shaft 17, urges the second pressure plate 28 away from the friction discs 25 and 26 so that, in the absence of pressure in the thrust chamber 29, the second friction clutch 18 is kept in the disengaged condition. In this condition, the planet-carrier 15 is freely rotatable relative to the output sun gear 9.

In the embodiment illustrated, the two thrust chambers 23 and 29 of the two friction clutches 17 and 18 are interconnected by means of axial passages 31, and the connection with the hydraulic circuit for operating these clutches is achieved by means of a single passage 32 formed in the auxiliary shaft 16a and connected at one end to a fixed supply connector 33 and at its opposite end to the thrust chamber 29 through one or more passages 34 formed in the bell member 16.

In operation, the drive imparted to the counter shaft 4 by the driven gear 5 which is selected and engaged in accordance with the chosen gear ratio, is transmitted by the sun gear 8 to the epicyclic unit 7 and from this through the output sun gear 9 to the output shaft 10. If pressurised hydraulic fluid is not supplied to the duct 32, and hence to the chambers 29, 23, the second friction clutch 18 is kept disengaged by the spring 30, whilst the friction clutch 17 is kept engaged by the Belleville washers 24. In this situation, the planet-carrier 15 is locked against rotation, corresponding to the rotation of the output shaft 10 at a slow speed, with a transmission ratio of the order of 1:1.1666. This same condition also occurs if there is any damage to the hydraulic supply system of the clutches 17 and 18 so that the mechanical continuity of the drive is ensured in any case.

If pressurised hydraulic fluid is delivered to the chambers 29 and 23 through the passage 32, the second friction clutch 18 is engaged and the friction clutch 17 is disengaged simultaneously as a result of the axial displacement of the two pressure plates 28 and 22 in opposite directions against the actions of the spring 30 and of the washers 24. In this situation, the planet-carrier 15 is made fast for rotation with the output sun gear 9 so that the output shaft 10 is put into direct engagement with the counter shaft 4, producing a transmission ratio of 1:1.

The changeover between the engagement of the clutch 18 and the disengagement of the clutch 17 and vice versa, which is necessary to ensure continous transmission of the torque, is achieved by suitable calibration of the helical spring 30.

In order to optimise the changeover graph for the engagement/disengagement of the clutches 17 and 18, a variant (not illustrated) is envisaged with duplicated supply to the thrust chambers 23, 29 through respective passages formed in the auxiliary shaft 17 and in the bell member 16. In this case the intercommunication passages 31 between the chambers 23 and 29 are closed.

The duplicated supply may be controlled electronically by means of a control unit which operates in dependence on external operating parameters (drive engaged, oil temperature, rate of rotation of the tractor engine) so as to vary the changeover graph of the two clutches 17 and 18 and thus render the operation of the epicyclic unit 7 dependent on the prevailing operating conditions of the tractor.

## Claims

1. A tractor gearbox including a main shaft which is rotated by the tractor engine through a friction clutch and to which a plurality of driving gears are coupled for rotation, a counter shaft on which a plurality of driven gears meshed with the driving gears are rotatably mounted, mechanically-operated engagement-synchronising means for selectively connecting the driven gears for rotation with the counter shaft and a transmission-ratio variator with two speeds, fast and slow respectively, characterised in that the variator (7) is situated downstream of the gearbox and comprises an epicyclic unit having an input member (8) rotated by the counter shaft (4) of the gearbox (1) and an output member (9) rotated through two hydraulically-operated friction clutches (17, 18) which can be engaged and disengaged alternatively without interrupting the torque transmission from the counter shaft (4) of the gearbox (1) to the output member (9) of the epicyclic unit, and in that the counter shaft (4) of the gearbox (1) is hollow and the epicyclic unit (7) comprises:
- a first sun gear (8) coupled for rotation with the counter shaft (4),
- a second sun gear (9) coupled for rotation with an output shaft (10) which passes through and is rotatable coaxially in the counter shaft (4),
- a planet-carrier (15) coaxial with the output shaft (10) and carrying a series of planets (13) with two sets of teeth (11, 12) of which the first set (11) meshes with the first sun gear (8) and the second set (12) meshes with the second sun gear (9); the planet-carrier (15) being selectively lockable against rotation by means of the engagement of the first (17) of the two friction clutches or connectible for rotation with the second sun gear (9) by means of the engagement of the second (18) of the two friction clutches; resilient means (24) being provided for keeping the first friction clutch (17) normally engaged.

2. A gearbox according to Claim 1, characterised in that the epicyclic unit (7) includes an idle auxiliary shaft (16a) which is aligned with the output shaft (10) and to which a bell member (16) firmly fixed to the planet-carrier (15) is coupled for rotation, the bell member having associated therewith, on opposite sides, first and second series of driving friction discs (19, 25) cooperating with first and second series of driven friction discs (20, 26) carried by a fixed structure (21) and by the second sun gear (9) respectively; first and second pressure plates (22, 28) respectively being operatively associated with the friction discs (19, 20; 25, 26) and defining with the bell member (16) first and second thrust chambers (23, 29) respectively connected to hydraulic operating means for supplying pressurised hydraulic fluid; the supply to the first chamber (23) causing the movement of the first pressure plate (22) away from the corresponding friction discs (19, 20) against the action of first resilient biassing means (24) and the supply `to the second chamber (29) causing the movement of the second pressure plate (28) towards the corresponding friction discs (25, 26) against the action of second resilient biassing means (30).

3. A gearbox according to Claim 2, characterised in that the hydraulic operating means include common passages (32, 34) for the supply of the two thrust chambers (23, 29) and in that the two thrust chambers (23, 29) are in communication with each other.

4. A gearbox according to Claim 2, characterised in that the hydraulic operating means include separate pasages for the supply of the two thrust chambers and electronic control means operating in dependence on the operative conditions of the tractor.

## Patentansprüche

1. Traktorgetriebe, das eine Hauptwelle enthält, die über eine Reibungskupplung durch den Traktormotor gedreht wird, und an der eine Vielzahl von Antriebsrädern drehbar angebracht sind, eine Gegenwelle, an der eine Vielzahl von Rädern drehbar angebracht sind, die mit den Antriebsrädern im Eingriff sind, eine mechanisch betätigte Eingriffs-Synchronisierungseinrichtung, die die angetriebenen Räder wahlweise mit der Gegenwelle drehbar verbindet, sowie ein Übersetzungsverhältnis-Variator mit zwei Geschwindigkeiten, d.h. schnell bzw. langsam, **dadurch gekennzeichnet**, daß sich der Variator (7) hinter dem Getriebe befindet und eine Planetenradeinheit umfaßt, die ein Eingangselement (8) aufweist, das durch die Gegenwelle (4) des Getriebes (1) gedreht wird, sowie ein Ausgangselement (9), das durch zwei hydraulisch betätigte Reibungskupplungen (17, 18) gedreht wird, die abwechselnd ein- und ausgekuppelt werden können, ohne die Drehmomentübertragung von der Gegenwelle (4) des Getriebes (1) zum Ausgangselement (9) der Planetenradeinheit zu unterbrechen, und daß die Gegenwelle (4) des Getriebes (1) hohl ist, und die Planetenradeinheit (7) umfaßt:
- ein erstes Sonnenrad (8), das mit der Gegenwelle (4) drehbar angebracht ist,
- ein zweites Sonnenrad (9), das mit einer Ausgangswelle (10) drehbar angebracht ist, die durch die Gegenwelle (4) verläuft und koaxial in selbiger drehbar ist,
- einen Planetenträger (15), der koaxial zur Ausgangswelle (10) ist und eine Reihe von Planetenrädern (13) mit zwei Gruppen von Zähnen (11, 12) trägt, wobei die erste Gruppe (11) mit dem ersten Sonnenrad (8) im Eingriff ist, und die zweite Gruppe (12) mit dem zweiten Sonnenrad (9) im Eingriff ist; wobei der Planetenträger (15) wahlweise durch das Einkuppeln der ersten (17) der beiden Reibungskupplungen gegen Drehung arretiert werden kann, oder durch das Einkuppeln der zweiten (18) der beiden Reibungskupplungen mit dem zweiten Sonnenrad (9) drehbar verbunden werden kann, wobei eine Federeinrichtung (24) vorhanden ist, die die erste Reibungskupplung (17) im Ruhezustand eingekuppelt hält.

2. Getriebe nach Anspruch 1, **dadurch gekennzeichnet**, daß die Planetenradeinheit (7) eine leerlaufende Hilfswelle (16a) enthält, die mit der Ausgangswelle (10) fluchtend ist und an der ein Glockenelement (16), das fest an dem Planetenträger (15) befestigt ist, drehbar angebracht ist, wobei zu dem Glockenelement an einander gegenüberliegenden Seiten eine erste und eine zweite Reihe Antriebs-Reibscheiben (19, 25) gehören, die mit einer ersten und einer zweiten Reihe angetriebener Reibscheiben (20, 26) zusammenwirken, die von einer stationären Struktur (21) bzw. von dem zweiten Sonnenrad (9) getragen werden; wobei eine erste und eine zweite Druckplatte (22, 28) jeweils funktionell mit den Reibscheiben (19, 20; 25, 26) verbunden sind und mit dem Glockenelement (16) eine erste und eine zweite Druckkammer (23, 29) bilden, die jeweils mit Hydraulik-Betätigungseinrichtungen verbunden sind, die unter Druck stehende Hydraulikflüssigkeit zuführen; wobei die Zufuhr zur ersten Kammer (23) die Bewegung der ersten Druckplatte (22) von den entsprechenden Reibscheiben (19, 20) weg gegen die Wirkung einer ersten federnden Druckeinrichtung (24) bewirkt, und die Zufuhr zur zweiten Kammer (29) die Bewegung der zweiten Druckplatte (28) in Richtung der entsprechenden Reibscheiben (25, 26) gegen die Wirkung einer zweiten federnden Druckeinrichtung (30) bewirkt.

3. Getriebe nach Anspruch 2, **dadurch gekennzeichnet**, daß die hydraulischen Betätigungseinrichtungen gemeinsame Kanäle (32, 34) zur Speisung der beiden Druckkammern (23, 29) enthalten, und daß die beiden Druckkammern (23, 29) miteinander in Verbindung stehen.

4. Getriebe nach Anspruch 2, **dadurch gekennzeichnet**, daß die hydraulischen Betätigungseinrichtungen separate Kanäle zur Speisung der beiden Druckkammern enthalten und eine elektronische Steuereinrichtung, die in Abhängigkeit von den Funktionsbedingungen des Traktors arbeitet.

## Revendications

1. Boîte de vitesses de tracteur comportant un arbre principal qui est mis en rotation par le moteur du tracteur par l'intermédiaire d'un embrayage à friction et sur lequel plusieurs engrenages d'entraînement sont reliés pour tourner, un arbre intermédiaire sur lequel plusieurs engrenages entraînés, entraînés par les engrenages d'entraînement sont montés de manière rotative, des moyens de synchronisation d'embrayage actionnés de manière mécanique pour relier de manière sélective les engrenages entraînés pour qu'ils tournent avec l'arbre intermédiaire et un variateur de rapport de transmission ayant deux vitesses, rapide et lente respectivement, caractérisée en ce que le variateur (7) de rapport de transmission est situé en aval de la boîte de vitesses et comporte un train épicycloïdal ayant un élément d'entrée (8) mis en rotation par l'arbre intermédiaire (4) de la boîte de vitesses (1) et un élément de sortie (9) mis en rotation par l'intermédiaire de deux embrayages à friction (17, 18) actionnés de manière hydraulique qui peuvent être embrayés et débrayés alternativement sans interrompre la transmission du couple provenant de l'arbre intermédiaire (4) de la boîte de vitesses (1) vers l'élément de sortie (9) du train épicycloïdal, et en ce que l'arbre intermédiaire (4) de la boîte de vitesses (1) est creux et le train épicycloïdal (7) comporte:
un premier planétaire (8) relié pour tourner avec l'arbre intermédiaire (4),
un second planétaire (9) relié pour tourner avec un arbre de sortie (10) qui passe à travers l'arbre intermédiaire (4) et peut tourner coaxialement à ce dernier,
un support (15) de satellites coaxial à l'arbre de sortie (10) et supportant une série de satellites (13) ayant deux jeux de dents (11, 12) dont le premier jeu (11) engrène avec le premier planétaire (8) et le second jeu (12) engrène avec le second planétaire (9), le support (15) de satellites pouvant être verrouillé de manière sélective à l'encontre d'une mise en rotation par l'intermédiaire de l'embrayage du premier (17) des deux embrayages à friction ou pouvant être relié pour tourner avec le second planétaire (9) par l'intermédiaire de l'embrayage du second (18) des deux embrayages à friction, des moyens élastiques (24) étant prévus pour maintenir émbrayé de manière normale le premier embrayage (17) à friction.

2. Boîte de vitesses selon la revendication 1, caractérisée en ce que le train épicycloïdal (7) comporte un arbre auxiliaire (16a) monté fou qui est aligné avec l'arbre de sortie (10) et sur lequel est relié pour tourner un élément (16) formant cloche fixé de manière ferme au support (15) de satellites, l'élément formant cloche étant associé sur ses côtés opposés à une première et une seconde séries de disques d'entraînement par friction (19, 25) coopérant avec la première et la seconde séries de disques de friction entraînés (20, 26) supportée par une structure fixe (21) et par le second planétaire (9) respectivement, une première plaque de pression et une seconde plaque de pression (22, 28) étant associées respectivement de manière opérationnelle aux disques de friction (19, 20; 25, 26) et définissant avec l'élément (16) formant cloche une première et une seconde chambres de poussée (23, 29) respectivement reliées aux moyens d'actionnement hydraulique destinés à alimenter du fluide hydraulique sous pression; l'alimentation de la première chambre (23) entraînant le déplacement de la première plaque de pression (22) en l'éloignant des disques de friction correspondant (19, 20) à l'encontre de l'action de premiers moyens de sollicitation élastique (24) et l'alimentation vers la seconde chambre (29) entraînant le déplacement de la seconde plaque de pression (28) vers les disques de friction correspondants (25, 26) à l'encontre de l'action de seconds moyens de rappel élastique (30).

3. Boîte de vitesses selon la revendication 2, caractérisée en ce que les moyens d'actionnement hydraulique comportent des passages communs (32, 34) destinés à alimenter les deux chambres de poussée (23, 29) et en ce que les deux chambres de poussée (23, 29) communiquent l'une avec l'autre.

4. Boîte de vitesses selon la revendication 2, caractérisée en ce que les moyens d'actionnement hydraulique comportent des passages séparés destinés à l'alimentation des deux chambres de poussée et des moyens de commande électronique agissant en fonction des conditions de fonctionnement du tracteur.
